# EUROPÄISCHE PATENTSCHRIFT

(11) **EP 1 838 190 B1**
(45) Veröffentlichungstag und Bekanntmachung des Hinweises auf die Patenterteilung: **16.02.2011**
(21) Anmeldenummer: 05736702.1
(22) Anmeldetag: 05.04.2005
(51) Int. Cl.: A47J 43/25

(54) **HALTER MIT SCHACHTELELEMENT FÜR EINE VORRICHTUNG ZUM ZERKLEINERN VON NAHRUNGSMITTELN**
HOLDER WITH A SHAFT ELEMENT FOR A DEVICE FOR GRATING/SLICING FOODSTUFFS
SUPPORT A ELEMENT EN FORME DE PUITS POUR DISPOSITIF SERVANT A FRAGMENTER DES PRODUITS ALIMENTAIRES

(30) Priorität: 17.01.2005 DE 102005002328; 25.01.2005 US 646925 P; 04.02.2005 DE 102005005510; 09.02.2005 US 651254 P
(43) Veröffentlichungstag der Anmeldung: 03.10.2007
(73) Patentinhaber: Leifheit AG, 56377 Nassau/Lahn (DE)
(72) Erfinder: KLOTZ, Markus, 56357 Hainau (DE); SCHRAMM, Benjamin, 65558 Eppenrod (DE); GROSS, Christian, 57250 Netphen (DE); GERSTER, Stephan, 53498 Bad Breisig (DE)
(74) Vertreter: Bungartz, Klaus Peter
(86) Internationale Anmeldenummer: PCT/EP2005/003565
(87) Internationale Veröffentlichungsnummer: WO 2006/074703

(56) Entgegenhaltungen:
- EP-A- 0 412 489
- DE-C- 329 251
- DE-U1- 20 007 264
- DE-U1- 29 914 149
- US-A- 3 583 454

## Beschreibung

Die Erfindung betrifft einen Halter für Nahrungsmittel wie in Oberbegriff von Anspruch 1 definiert, mit zumindest einem Aufsetzelement, das eine Grundebene definiert und zur Herstellung einer mechanischen Verbindung - vorzugsweise einer Gleitverbindung - zu einer Vorrichtung zum Zerkleinern von Nahrungsmitteln - insbesondere zu einer Reibe oder einem Hobel - geeignet sind, und mit einem Schachtelement, in das zu zerkleinernde Nahrungsmittel einführbar und einer mit dem Halter verbindbaren Vorrichtung zum Zerkleinern von Nahrungsmitteln zuführbar sind. Die DE329251C offenbart einem Halter wie in Oberbegriff von Anspruch 1 definiert.

DE 2816929 offenbart eine Vorrichtung zum Zerkleinern von Nahrungsmitteln bestehend aus einer mit einem Handgriff versehenen länglichen Grundplatte, über deren Oberfläche das zu zerkleinernde Gut von Hand hin- und herbewegbar ist. Im mittleren Bereich weist die Vorrichtung ein austauschbares Zerkleinerungsblech auf. Die DE 2816929 offenbart auch einen Restehalter, der, das zu zerkleinernde Gut haltend, auf der Grundplatte hin und her bewegt werden kann.

Aus DE 28 57 743 ist ein Restehalter für eine Vorrichtung zum Zerkleinern von Nahrungsmitteln bekannt. Der Restehalter weist eine rohrförmige Aufnahme für das zu zerkleinernde Gut und einen Andrückteil mit einer über die rohrförmige Aufnahme aufschiebbaren Haube auf.

Die bekannten Halter haben den Nachteil, dass das zu schneidende Gut während des Schneidvorganges nicht ausreichend gut geführt ist, was negativen Einfluss auf das Schnittergebnis hat.

Der Erfindung liegt daher die Aufgabe zugrunde, eine einen Halter anzugeben, mit dem das zu schneidende Gut leichtgängig und präzise über eine Vorrichtung zum Zerkleinern von Nahrungsmitteln führbar ist.

Die Aufgabe wird durch einen Halter gelöst, der .

Der erfindungsgemäße Halter hat den Vorteil, dass insbesondere längliches Schneidgut, wie beispielsweise Möhren, besonders präzise und leichtgängig über eine Vorrichtung zum Zerkleinern von Nahrungsmitteln, wie eine Reibe oder einen Hobel, führbar ist. Es besteht dabei vorteilhafter Weise die Möglichkeit längliches Schneidgut schräg dem länglichen Querschnitt folgend in das Schachtelement einzulegen, wodurch dieses besonders gut während eines Schneidvorganges fixiert ist. Es ist hierdurch außerdem ermöglicht längliches Schneidgut schräg - also unter einem stark von 90 Grad abweichenden Winkel zu Längsachse des Schneidgutes - zu schneiden; beispielsweise um längliche Scheiben zu erzeugen.

In einer besonderen Ausgestaltungsform weist das Schachtelement einen ovalen Querschnitt aufweist. In einer anderen Variante weist das Schachtelement einen elliptischen Querschnitt auf. Das Schachtelement kann vorteilhafter Weise auch einen rechteckigen, dreieckigen, rautenförmigen oder trapezförmigen Querschnitt aufweisen. Das Schachtelement kann insbesondere einen unregelmäßigen polygonförmigen Querschnitt aufweisen. Erfindungsgemäß weist aus Schachtelement zumindest eine lange Öffnungsweite und eine kurze Erfindungsgemäß Öffnungsweite auf. Besonders bevorzugt ist ein Schachtelement mit einem dreieckigen Querschnitt. Das Dreieck kann vorteilhafter Weise ungleichseitig ausgebildet sein, wodurch eine besonders gute Führung des zu schneidenden Gutes in dem Halter erreicht wird.

Vorteilhafter Weise weist das das Schachtelement im Innen und/oder im Außenbereich abgerundete Ecken auf. Hierdurch ist ein Verkanten und Verklemmen des zu zerkleinernden Gutes vermieden und eine leichte Reinigung des Halters gewährleistet.

Vorzugsweise ist der Halter mechanisch mit einer Vorrichtung zum Zerkleinern die Merkmale des Kennzeichens von Anspruchs 1 aufweist*.* von Nahrungsmitteln - insbesondere einer Reibe oder einem Hobel -, verkoppelbar , wobei zumindest ein Führungselement vorgesehen ist, dass eine Arbeitsbewegungsachse definiert.

Erfindungsgemäß weist die Richtung der langen Öffnungsweite einen von Null Grad verschiedenen Winkel zur Arbeitsbewegungsachse auf. Diese Ausgestaltungsform gewährleistet dass das zu schneidende Gut während der Schneidbewegung zusätzlich zur Bewegung auf das Schneidmesser eines Hobels zu auch eine Bewegung senkrecht zur Schneide des Schneidmessers ausführt, wodurch der Schneidvorgang eher mit dem Schneiden mit einem Messer als mit dem Haken mit einem Beil vergleichbar ist. Letztlich resultiert aus dem schräg zur Bewegungsrichtung gestellten Schachtelement ein saubererer, präzisen und leichtgängigerer Zerkleinerungsvorgang.

Erfindungsgemäß weist die Richtung der langen Öffnungsweite einen von 90 Grad verschiedenen Winkel zur Arbeitsbewegungsachse auf. Das Schachtelement weist in einer Ausgestaltungsformeinen einen ovalen und/oder elliptischen Querschnitt auf. Entsprechend steht die große Längsachse des ovalen und/oder elliptischen Querschnitts des Schachtelements in der Projektion auf die Grundebene einen von Null Grad verschiedenen Winkel zur Arbeitsbewegungsachse bezüglich der Zerkleinerungsbewegung. Durch diese Schrägstellung wird das zu schneidende Gut besonders sauber und und gut fixiert über die Schneidmesser einer Vorrichtung zum Zerkleinern von Lebensmitteln - insbesondere Reibe und/oder Hobel - geführt.

In einer besonderen Aufrührungsform ist das Schachtelement relativ zu den Aufsetzelementen drehbar gelagert ist. Hierdurch kann man den Halter der Form des zu schneidenden Gutes anpassen. Diese Ausgestaltungsform ist besonders gut an verschiedene Anforderungen beim Wechsel der Art des zu zerkleinernden Gutes anpassbar. Vorzugsweise ist ein Mittel zum Fixieren einer gewählten Drehstellung vorgesehen.

Der Halter hat vorzugsweise ein Aufsetzelement, das eine Grundebene definiert und zur Herstellung einer mechanischen Verbindung - vorzugsweise einer Gleitverbindung - zu einer Vorrichtung zum Zerkleinern von Nahrungsmitteln - insbesondere zu einer Reibe oder einem Hobel - geeignet ist.

Das Schachtelement weist in einer besonderen Ausgestaltungsform einen von 90 Grad verschiedenen Winkel - vorzugsweise einen Winkel im Bereich von 30 bis 60 Grad, insbesondere von 45 Grad - zur Grundebene auf. Besonders Vorteilhaft ist ein Halter, bei dem der Winkel des Schachtelements zur Grundebene einstellbar ist. Hierdurch kann der Winkel des Schachtelements zur Grundebene individuell der Neigung der eingesetzten Reibe angepasst werden Ein schräg zur Grundebene angeordnetes Schachtelement hat den Vorteil, dass der Benutzer nur noch in eine Richtung, vorzugsweise entlang der Senkrechten drücken muss, wobei gleichzeitig das zu schneidende gut in den Halter gedrückt wird und der Halter über eine Vorrichtung zum Zerkleinern von Nahrungsmitteln geschoben wird. Die Aufteilung der vom Benutzer ausgeübten Kraft in die erforderlichen zwei Kräfte erfolgt automatisch. Der Benutzer muss lediglich von oben nach unten drücken und waagerecht gerichteten Kräfte mehr ausüben. Was die waagerechte Bewegung angeht, wird die Hand des Benutzers gewissermaßen von dem Halter geführt.

Als Aufsetzelement können beispielsweise eine oder mehrer Gleitflächen dienen, die beispielsweise auf Führungsschienen einer Vorrichtung zum Zerkleinern von Nahrungsmitteln aufliegen. Das Aufsetzelement kann beispielsweise auch Räder und/oder Rollen und/oder Anschlagelemente und/oder Führungselemente beinhalten. Vorzugsweise ist die Grundebene parallel zu der Gleitbahn der Vorrichtung zum Zerkleinern von Nahrungsmitteln ausgerichtet, mit der der Halter zusammen verwendet wird.

In einer Ausgestaltungsvariante weist das Aufsetzelement zumindest ein Führungselement auf, das mit Führungselementen einer Vorrichtung zum Zerkleinern von Lebensmitteln - insbesondere einer Reibe und/oder einem Hobel - mechanisch verkoppelbar ist. Vorzugsweise ist der Halter in eine Führung einer Vorrichtung zum Zerkleinern von Lebensmitteln - insbesondere einer Reibe und/oder einem Hobel - senkrecht zur Arbeitsbewegungsachse bezüglich der Zerkleinerungsbewegung einrastbar. Hierdurch ist vermieden, dass der Halter umständlich an den Enden der zu verwendenden Reibe eingeschoben werden muss.

Vorzugsweise sind der Halter und die zu verwendende Vorrichtung zum Zerkleinern von Lebensmitteln - insbesondere Reibe und/oder Hobel - in Bezug auf Winkel und/oder Führung aufeinander abgestimmt.

Vorzugsweise ist zumindest ein Festlegmittel vorgesehen, mit dem der Halter an einer Vorrichtung zum Zerkleinern von Lebensmitteln - insbesondere einer Reibe und/oder einem Hobel - lösbar festlegbar ist. Das Festlegmittel kann zumindest Teile einer Rastverbindung und/oder einer Einhakverbindung aufweisen. Hierdurch kann das Halter auf einfache Weise zusammen mit der Vorrichtung zum Zerkleinern von Lebensmitteln - insbesondere Reibe und/oder Hobel - verstaut werden.

Vorteilhafter Weise ist die Vorrichtung zum Zerkleinern von Lebensmitteln mit der der Halter verwendet werden soll hinsichtlich der besonderen vorteilhaften Merkmale des Halters angepasst. Besonders vorteilhaft werden Halter und Vorrichtung zum Zerkleinern von Lebensmitteln als Komplettsystem aufeinander abgestimmt hergestellt.

Die Vorrichtung zum Zerkleinern von Lebensmitteln weist vorzugsweise eine Gleitbahn auf, auf der zum Ausführen eines Zerkleinerungsvorganges ein zu zerkleinerndes Gut verschiebbar ist. In einer besonders bevorzugten Variante ist eine Standvorrichtung zum Aufstellen der Vorrichtung auf eine Tischfläche, wobei die Gleitbahn einen von Null Grad verschiedenen Aufstellwinkel zur Tischfläche aufweist, vorgesehen. Vorzugsweise weist das Schachtelement einen dem Aufstellwinkel entsprechenden Winkel (und/oder einen Winkel von 90 Grad plus dem Aufstellwinkel) zur Grundebene und/oder zur Gleitbahn auf.

Besonders vorteilhafter Weise ist das Schachtelement senkrecht zur Waagerechten angeordnet ist, weil hierbei vom Benutzer nur eine Kraft senkrecht zur Tischfläche ausgeübt werden muss.

In der Zeichnung ist der Erfindungsgegenstand schematisch dargestellt und wird anhand der Figuren nachfolgend beschrieben, wobei gleich wirkende Elemente mit denselben Bezugszeichen versehen sind. Dabei zeigen:
- Fig. 1: einen erfindungsgemäßen Halter,
- Fig. 2: den erfindungsgemäßen Halter mit eingesetztem Nachdrückstempel,
- Fig. 3: eine Vorrichtung zum Zerkleinern von Nahrungsmitteln mit einem aufgesetzten erfindungsgemäßen Halter,
- Fig. 4: eine Vorrichtung zum Zerkleinern von Nahrungsmitteln mit einem Halter und einer Standvorrichtung,
- Fig. 5: eine Detailansicht eines erfindungsgemäßen Halters, und
- Fig. 6: eine Vorrichtung zum Zerkleinern von Nahrungsmitteln mit einer Standvorrichtung und einem anderen erfindungsgemäßen Halter.

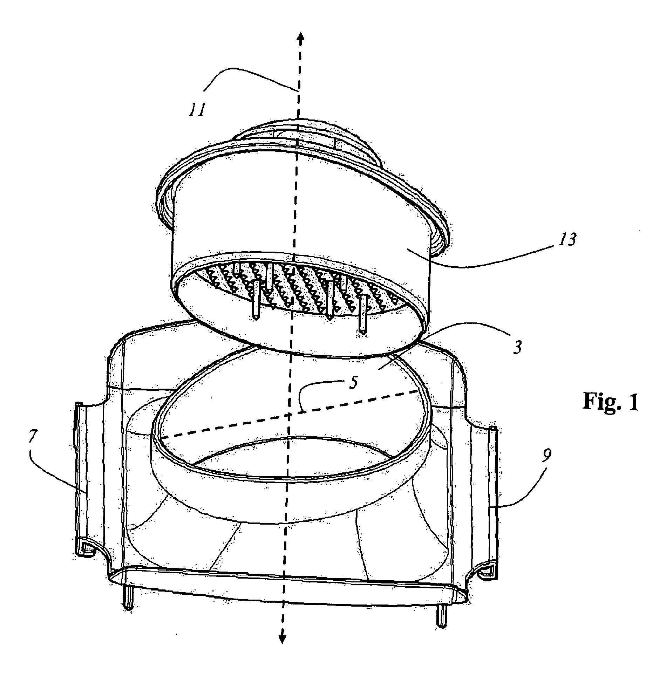

Fig. 1 zeigt einen erfindungsgemäßen Halter 1 für Nahrungsmittel für eine Vorrichtung zum Zerkleinern von Nahrungsmitteln - insbesondere für eine Reibe oder einem Hobel -, mit einem Schachtelement 3, in das zu zerkleinernde Nahrungsmittel einführbar und durch den hindurch Nahrungsmitte einer mit dem Halter verbindbaren Vorrichtung zum Zerkleinern zuführbar sind. Das Schachtelement 3 weist einen länglichen, ovalen Querschnitt auf.

Das Schachtelement 3 weist eine lange Öffnungsweite 5 und eine nicht eingezeichnete kurze Öffnungsweite auf. Der Halter 1 ist mechanisch mit einer in dieser Figur nicht gezeigten Vorrichtung zum Zerkleinern von Nahrungsmitteln - insbesondere einer Reibe oder einem Hobel -, verkoppelbar, wobei ein erstes Führungselement 7 und ein zweites Führungselement 9 vorgesehen sind, die eine Arbeitsbewegungsachse 11 definieren. Die Führungselemente 7, 9 sind dazu vorgesehen, in Führungsschienen einer Vorrichtung zum Zerkleinern von Nahrungsmitteln - insbesondere einer Reibe oder einem Hobel - zu umgreifen, wobei sie zusammen mit dem Halter auf den Führungsschienen verschiebbar sind.

Die Richtung der langen Öffnungsweite 5 weist einen schrägen (von Null Grad und von 90 Grad) verschiedenen Winkel zur Arbeitsbewegungsachse auf.

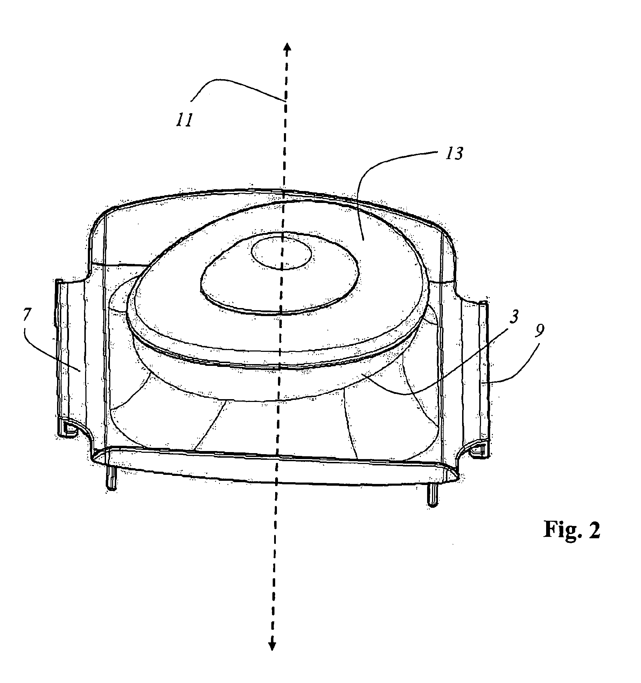

Es ist ein Nachdrückstempel 13 vorgesehen, der in das Schachtelement 3 einführbar ist. Die Außenform des Nachdrückstempels 13 ist der Innenform des Schachtelement 3 angepasst. Fig. 2 zeigt den erfindungsgemäßen Halter mit eingesetztem Nachdrückstempel 13.

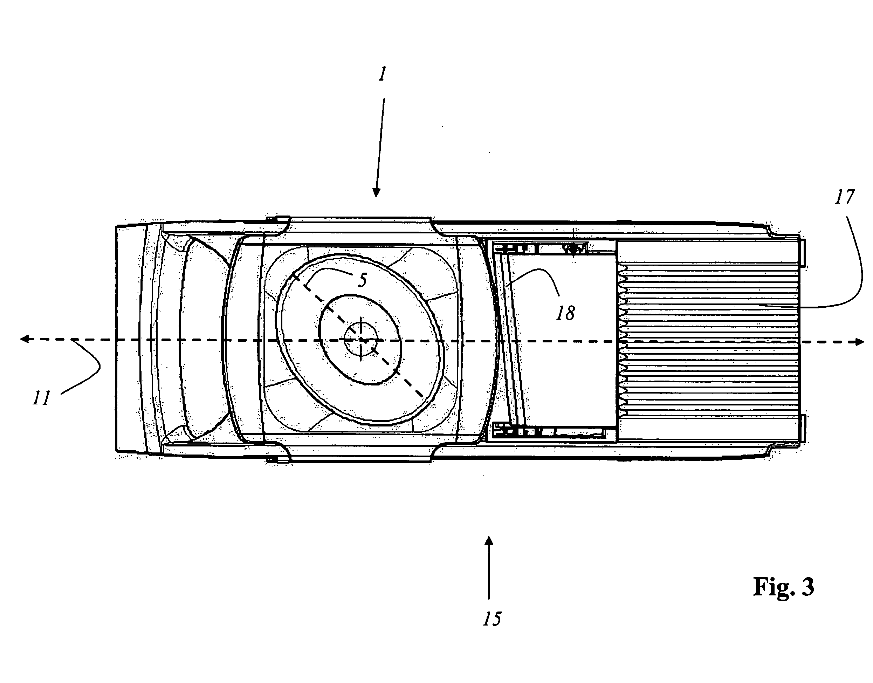

Fig. 3 zeigt eine mit einem aufgesetzten erfindungsgemäßen Halter 1 und mit einer Gleitbahn 17, auf der zum Ausführen eines Zerkleinerungsvorganges ein zu zerkleinerndes Gut verschiebbar ist. Die Vorrichtung 15 zum Zerkleinern von Nahrungsmitteln ist mit einem Schneidmesser 18 ausgerüstet. Der Halter 5 ist entlang der Arbeitsbewegungsachse 11 auf der Die Vorrichtung 15 zum Zerkleinern von Nahrungsmitteln hin und her verschiebbar, wobei ein zu zerkleinerndes Gut über das Schneidmesser 18 geführt werden kann.

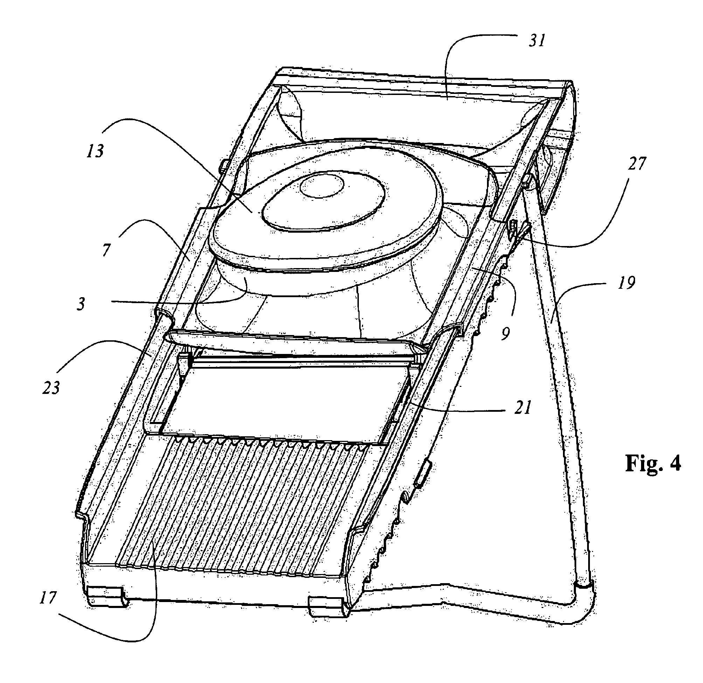

Die in Fig. 4 gezeigte Vorrichtung 15 zum Zerkleinern von Nahrungsmitteln weist einen Ständerbügel 19 zum Aufstellen der Vorrichtung auf einer Tischfläche auf. Außerdem sind Führungsschienen 21, 23 vorgesehen, die mit den Führungselement 7, 9 des Halters 5, den Halter 5 auf der Gleitbahn 17 halten und dafür sorgen, dass der Halter sauber und exakt entlang der Arbeitsbewegungsachse 11 verschiebbar ist.

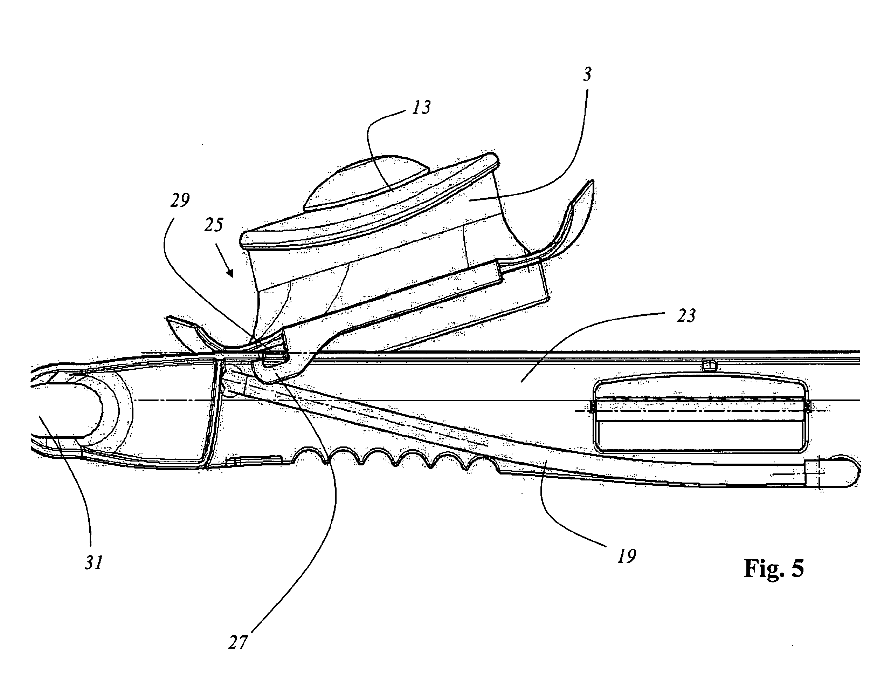

Fig. 5 zeigt ein Festlegmittel 25 mit dem der Halter 1 an der Vorrichtung 15 zum Zerkleinern von Lebensmitteln lösbar festlegbar ist. Das Festlegmittel 25 ist als Einhakverbindung ausgestaltet und besteht im Wesentlichen aus einem Haken 27 am Halter 1 und einem Dorn 29 an der Vorrichtung 15 zum Zerkleinern von Lebensmitteln. Hierdurch kann das Halter auf einfache Weise zusammen mit der Vorrichtung 15 zum Zerkleinern von Lebensmitteln - verstaut werden. Die Vorrichtung 15 zum Zerkleinern von Lebensmitteln weist einen Handgriff 31 auf. Bei der in dieser Figur gezeigten Vorrichtung ist der Ständerbügel 19 eingeklappt.

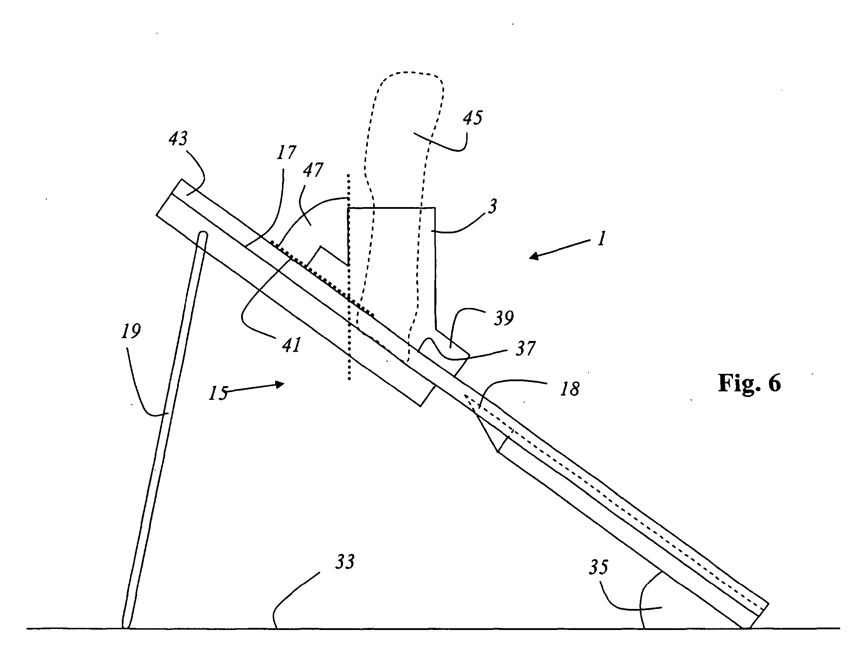

Die in Fig. 6 gezeigte Vorrichtung 15 zum Zerkleinern von Nahrungsmitteln weist einen Ständerbügel 19 zum Aufstellen der Vorrichtung 15 auf einer Tischfläche 33 unter einem Aufstellwinkel 35 auf. Auf die Vorrichtung 15 zum Zerkleinern von Nahrungsmitteln ist ein Halter 1 mit einem eine Gleitfläche 37 aufweisenden Aufsetzelement 39, das eine Grundebene 41 definiert und zur Herstellung einer mechanischen einer Gleitverbindung zu der Vorrichtung 15 zum Zerkleinern von Nahrungsmitteln dient. Die Vorrichtung 15 zum Zerkleinern von Nahrungsmitteln ist mit Gleitführungsschienen 43 ausgerüstet, auf denen die Gleitflächen 37 bei der Schneidbewegung (Hin-und-herBewegung) gleiten. Der Halter 1 weist ein Schachtelement 13 auf, in das das zu zerkleinernde Gut 45 einführbar und der Vorrichtung 15 zum Zerkleinern von Nahrungsmitteln zuführbar ist. Das Schachtelement 13 weist einen von 90 Grad verschiedenen Winkel 47, nämlich einen dem Aufstellwinkel 35 entsprechenden Winkel, zur Grundebene 41 auf. Zum Ausführen der Schneidbewegung muss lediglich ein nach unten gerichteter Druck auf das zu zerkleinernde Gut 45 aufgeübt werden.

Die Erfindung wurde in Bezug auf eine besondere Ausführungsform beschrieben. Es ist jedoch selbstverständlich, dass Änderungen und Abwandlungen durchgeführt werden können, ohne dabei den Schutzbereich der nachstehenden Ansprüche zu verlassen.

### Bezugszeichenliste:

- 1: Halter
- 3: Schachtelement
- 5: lange Öffnungsweite
- 7: erstes Führungselement
- 9: zweites Führungselement
- 11: Arbeitsbewegungsachse
- 13: Nachdrückstempel
- 15: Vorrichtung zum Zerkleinern von Nahrungsmitteln
- 17: Gleitbahn
- 18: Schneidmesser
- 19: Ständerbügel
- 21: Führungsschiene
- 23: Führungsschiene
- 25: Festlegmittel
- 27: Haken
- 29: Dorn
- 31: Handgriff
- 33: Tischfläche
- 35: Aufstellwinkel
- 37: Gleitfläche
- 39: Aufsetzelement
- 41: Grundebene
- 43: Gleitführungsschiene
- 45: Gleitführungsschiene
- 47: Winkel zur Grundebene 41

## Patentansprüche

1. Halter (1) für Nahrungsmittel für eine Vorrichtung zum Zerkleinern von Nahrungsmitteln (15) - insbesondere für eine Reibe oder einem Hobel -, mit einem Schachtelement (3), in das zu zerkleinernde Nahrungsmittel einführbar und durch den hindurch Nahrungsmittel einer mit dem Halter (1) verbindbaren Vorrichtung zum Zerkleinern zuführbar sind, wobei das Schachelement einen länglichen Querschnitt mit einer langen Öffnungsweite (5) und einer kurzen Öffnungsweite aufweist, **dadurch gekennzeichnet, dass** die lange Öffnungsweite (5) zur Arbeitsbewegungsachse (11) schräg gestellt ist, dass nämlich die Richtung der langen Öffnungsweite (5) einen sowohl von 0 Grad als auch von 90 Grad verschiedenen Winkel zur Arbeitsbewegungsachse (11) aufweist.

2. Hafter nach Anspruch 1, **dadurch gekennzeichnet, dass** das Schachtelement (3) einen ovalen Querschnitt,
einen elliptischen Querschnitt,
einen rechteckigen oder dreieckigen Querschnitt,
einen rautenförmigen oder trapezförmigen Querschnitt oder
einen polygonförmigen Querschnitt aufweist.

3. Halter nach Anspruch 1 oder 2, **dadurch gekennzeichnet, dass** das Schachtetement (3) im Querschnitt abgerundete Ecken aufweist.

4. Halter nach einem der Ansprüche 1 bis 3, **dadurch gekennzeichnet, dass** der Halter (1) mechanisch mit einer Vorrichtung zum Zerkleinern von Nahrungsmitteln - insbesondere einer Reibe oder einem Hobel -, verkoppelbar ist und dass zumindest ein Führungselement (7,9) vorgesehen ist, dass eine Arbeitsbewegungsachse (11) definiert, wobei

5. Halter nach einem der Ansprüche 1 bis 4, **dadurch gekennzeichnet, dass** das Schachtelement (3) relativ zu den Aufsetzetementen (39) drehbar gelagert ist, wobei
ein Mittel zum Fixieren einer gewählten Drehstellung vorgesehen sein kann.

6. Halter nach einem der Ansprüche 1 bis, 5, **dadurch gekennzeichnet, dass** der Halter (1) in eine Führung (7,9) einer Vorrichtung zum Zerkleinern von Lebensmitteln - insbesondere einer Reibe und/oder einem Hobel - senkrecht zur Arbeitsbewegungsachse bezüglich der Zerkleinerungsbewegung einrastbar ist und/oder
dass der Halter ein Aufsetzelement (39), das eine Grundebene (41) definiert und zur Herstellung einer mechanischen Verbindung - vorzugsweise einer Gleitverbindung - zu einer Vorrichtung zum Zerkleinern von Nahrungsmitteln - insbesondere zu einer Reibe oder einem Hobel - geeignet ist, aufweist, wobei das Schachtelement (3) einen Winkel im Bereich von 30 bis 60 Grad, insbesonder von 45 Grad zur Grundebene (41) aufweisen kann und wobei der Winkel (47) des Schachtelement zur Grundebene (41) einstellbar sein kann.

7. Halter nach einem der Ansprüche 1 bis 6, **dadurch gekennzeichnet, dass** zumindest ein Festlegmittel (25) vorgesehen sind, mit dem der Halter (1) an einer Vorrichtung zum Zerkleinern von Lebensmitteln - insbesondere einer Reibe und/oder einem Hobel - lösbar festlegbar ist, wobei
das Festlegmittel (25) zumindest Teile einer Rastverbindung und/oder einer Einhakverbindung aufweisen kann.

8. Vorrichtung zum Zerkleinern von Lebensmitteln - insbesondere Reibe und/oder Hobel - mit einem Halter nach einem der Ansprüche 1 bis 7.

9. Vorrichtung nach Anspruch 8, **dadurch gekennzeichnet, dass** die Vorrichtung eine Gleitbahn (17) aufweist, auf der zum Ausführen eines Zerkleinerungsvorganges ein zu zerkleinerndes Gut verschiebbar ist, wobei
eine Standvorrichtung zum Aufstellen der Vorrichtung auf eine Tischfläche vorgesehen sein kann, wobei die Gleitbah (17) einen von Null Grad verschiedenen Aufstellwinkel (35) zur Tischfläche aufweisen kann und wobei das Schachtelement (3) einen dem Aufstellwinkel (35) entsprechenden Winkel zur Grundebene und/oder zur Gleitbahn aufweisen kann.

## Claims

1. A holder (1) for food for a device for chopping food (15), in particular for a grater and/or a slicer, comprising a box-shaped element (3), into which food, which is to be chopped can be inserted, and through which food can be supplied to a device for chopping, which can be connected to the holder (1), wherein the box-shaped element encompasses an elongated cross section comprising a long opening width (5) and a short opening width,
**characterized in that** the long opening width (5) is positioned diagonally to the working motion axis (11), namely such that the direction of the long opening width (5) encompasses an angle to the working motion axis (11), which differs from 0 degrees as well as from 90 degrees.

2. The holder according to claim 1, **characterized in that** the box-shaped element (3) encompasses an oval cross section,
an elliptical cross section,
a rectangular or triangular cross section,
a rhombic or trapezoidal cross section or
a polygonal-shaped cross section.

3. The holder according to claim 1 or 2, **characterized in that** the box-shaped element (3) encompasses corners, the cross section of which are rounded.

4. The holder according to one of claims 1 to 3, **characterized in that** the holder (1) can be mechanically coupled to a device for chopping food, in particular a grater or a slicer, and **in that** provision is made for at least one guide element (7, 9), which defines a working motion axis (11).

5. The holder according to one of claims 1 to 4, **characterized in that** the box-shaped element (3) is supported so as to be rotatable relative to the attachment elements (39), wherein provision can be made for a means for fixing a chosen rotary position.

6. The holder according to one of claims 1 to 5, **characterized in that** the holder (1) can engage with a guide (7, 9) of a device for chopping food, in particular a grater and/or a slicer, vertically to the working motion axis relative to the chopping motion and/or
**in that** the holder encompasses an attachment element (39), which defines a base plane (41) and which is suitable for establishing a mechanical connection, preferably a sliding connection, to a device for chopping food, in particular to a grater or a slicer, wherein the box-shaped element (3) can encompass an angle in the range of from 30 to 60 degrees, in particular of 45 degrees to the base plane (41) and wherein the angle (47) of the box-shaped element can be adjustable to the base plane (41).

7. The holder according to one of claims 1 to 6, **characterized in that** provision is made for at least one defining means (25), by means of which the holder (1) can be fixed to a device for chopping food, in particular a grater and/or a slicer, so as to be capable of being detached, wherein
the defining means (25) can encompass at least parts of a snap-in connection and/or of a hook connection.

8. A device for chopping food, in particular a grater and/or slicer, comprising a holder according to one of claims 1 to 7.

9. The device according to claim 8, **characterized in that** the device encompasses a sliding guide (17), on which an item (5), which is to be chopped, can be displaced for carrying out a chopping process, wherein provision can be made for a stand device for setting up the device on a table surface, wherein the sliding guide (17) can encompass a set-up angle (35) to the table surface, which differs from 0 degrees and wherein the box-shaped element (3) can encompass an angle to the base plane and/or to the sliding guide, which corresponds to the set-up angle (35).

## Revendications

1. Support pour aliment, pour un dispositif pour fractionner des aliments (15)(notamment pour une râpe ou un rabot) avec un élément en cheminée (3) dans lequel des aliments à fractionner peuvent être introduits et à travers lequel l'aliment peut être amené vers un dispositif de fractionnement susceptible d'être relié avec le support (1), l'élément en cheminée présentant une section transversale allongée avec une longue ampleur d'ouverture (5) et une courte ampleur d'ouverture, **caractérisé en ce que** la longue ampleur d'ouverture (5) est placée en inclinaison par rapport à l'axe de déplacement en travail (11), **en ce qu'**à savoir la direction de la longue ampleur d'ouverture (5) présente un angle différent aussi bien de 0 degré que de 90 degrés par rapport à l'axe de déplacement en travail (11).

2. Support selon la revendication 1, **caractérisé en ce que** l'élément en cheminée (3) présente une section transversale ovale,
une section transversale elliptique
une section transversale rectangulaire ou triangulaire
une section transversale en losange ou trapézoïdale ou
une section transversale polygonale.

3. Support selon la revendication 1 ou 2, **caractérisé en ce que** l'élément en cheminée (3) présente des angles arrondis dans sa section transversale.

4. Support selon l'une quelconque des revendications 1 à 3, **caractérisé en ce que** le support (1) est susceptible d'être accouplé mécaniquement à un dispositif de fractionnement d'aliments (notamment une râpe ou un rabot) et **en ce qu'**il est prévu au moins un élément de guidage (7, 9) qui définit un axe de déplacement en travail (11).

5. Support selon l'une quelconque des revendications 1 à 4, **caractérisé en ce que** l'élément en cheminée (23) est logé en rotation par rapport aux éléments à poser (39),
un moyen pour fixer une position en rotation choisie pouvant être prévu.

6. Support selon l'une quelconque des revendications 1 à 5, **caractérisé en ce que** le support (1) est susceptible de s'enclencher dans un guidage (7, 9) d'un dispositif de fractionnement d'aliments (notamment une râpe et/ou un rabot), à la perpendiculaire de l'axe de déplacement en travail pour le mouvement de fractionnement et/ou
**en ce que** le support comporte un élément à poser (39) qui définit un plan de base (41) et qui est apte à établir une liaison mécanique (de préférence une liaison en coulissement) sur un dispositif de fractionnement (notamment sur une râpe ou un rabot), l'élément en cheminée (3) pouvant présenter un angle de l'ordre de 30 à 60 degrés, notamment de 45 degrés par rapport au plan de base (41) et l'angle (41) de l'élément en cheminée par rapport au plan de base (41) étant réglable.

7. Support selon l'une quelconque des revendications 1 à 6, **caractérisé en ce qu'**il est prévu au moins un moyen d'immobilisation (25), à l'aide duquel le support (1) est susceptible d'être immobilisé de façon amovible sur un dispositif de fractionnement d'aliments (notamment une râpe et/ou un rabot)
le moyen d'immobilisation (25) pouvant comporter au moins des parties d'une liaison par enclenchement et/ou d'une liaison par accrochage.

8. Dispositif de fractionnement d'aliments (notamment râpe et/ou rabot), avec un support selon l'une quelconque des revendications 1 à 7.

9. Dispositif selon la revendication 8, **caractérisé en ce que** le dispositif comporte une surface de glissement (17) sur laquelle un produit à fractionner peut être déplacé pour réaliser un processus de fractionnement,
un dispositif de pose pour poser le dispositif sur la surface d'une table pouvant être prévu, la surface de glissement (17) pouvant présenter par rapport à la surface de la table un angle de pose (35) différent de zéro et l'élément en cheminée (3) pouvant présenter un angle correspondant à l'angle de pose (35) par rapport au plan de base et/ou à la surface de glissement.
